(19) **Europäisches Patentamt European Patent Office Office européen des brevets**

(11) **EP 4 100 265 B1**

(12) # FASCICULE DE BREVET EUROPEEN

(45) Date de publication et mention de la délivrance du brevet:
**22.11.2023 Bulletin 2023/47**

(21) Numéro de dépôt: **21707339.4**

(22) Date de dépôt: **02.02.2021**

(51) Classification Internationale des Brevets (IPC):
**B60C 9/00** *(2006.01)*    **B60C 11/03** *(2006.01)*
**B60C 9/02** *(2006.01)*    **B60C 9/04** *(2006.01)*

(52) Classification Coopérative des Brevets (CPC):
**B60C 9/005; B60C 11/0306; B60C 11/033;**
B60C 2009/0246; B60C 2009/0284;
B60C 2009/0475; B60C 2011/0341; B60C 2200/08

(86) Numéro de dépôt international:
**PCT/FR2021/050188**

(87) Numéro de publication internationale:
**WO 2021/156565 (12.08.2021 Gazette 2021/32)**

(54) **PNEUMATIQUE POUR VÉHICULE AGRICOLE COMPRENANT UNE ARMATURE DE CARCASSE MONOCOUCHE**

LANDWIRTSCHAFTLICHER FAHRZEUGREIFEN, DER EINE EINLAGIGE KARKASSENBEWEHRUNG UMFASST

AGRICULTURAL VEHICLE TYRE COMPRISING A SINGLE-LAYER CARCASS REINFORCEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2020  FR 2001176**

(43) Date de publication de la demande:
**14.12.2022  Bulletin 2022/50**

(73) Titulaire: **COMPAGNIE GENERALE DES ETABLISSEMENTS MICHELIN**
**63000 Clermont-Ferrand (FR)**

(72) Inventeurs:
• **PERRIN, Frédéric**
  **63040 CLERMONT-FERRAND Cedex 9 (FR)**
• **LACHAL, Florian**
  **63040 CLERMONT-FERRAND Cedex 9 (FR)**
• **CORNILLE, Richard**
  **63040 CLERMONT-FERRAND Cedex 9 (FR)**
• **RIH, Sabrina**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 1 109 682        EP-A1- 2 826 641
EP-B1- 1 109 682        WO-A1-2017/072708
FR-A1- 2 367 626        US-A1- 2003 019 557
US-A1- 2006 124 215

**Description**

La présente invention a pour objet un pneumatique pour véhicule agricole, tel qu'un tracteur agricole ou un véhicule agro-industriel, et concerne plus particulièrement son armature de carcasse.

Les spécifications dimensionnelles (largeur de section, diamètre hors tout, diamètre et largeur de jante de montage) et les conditions d'usage (charge, vitesse, pression) d'un pneumatique pour véhicule agricole sont définies dans des normes, telles que, par exemple, la norme de la « European Tyre and Rim Technical Organisation » ou ETRTO (Organisation européenne technique du pneumatique et de la jante) dans son « Standards Manual-2018 » (Manuel de normes-2018), dans la section consacrée aux « Agricultural equipment tyres » (Pneumatiques pour équipements agricoles). A titre d'exemple, un pneumatique radial pour roue motrice d'un tracteur agricole est destiné à être monté sur une jante dont le diamètre est généralement compris entre 16 pouces et 46 pouces, voire 54 pouces, et à équiper un tracteur agricole ayant une puissance comprise entre 50 CV et plus de 250 CV (jusqu'à 550 CV) et pouvant rouler jusqu'à 65 km/h. Pour ce type de pneumatique, la pression de gonflage minimale en utilisation, correspondant à la capacité de charge spécifiée, est le plus souvent au plus égale à 400 kPa, mais peut descendre jusqu'à 240 kPa, pour un pneumatique « Improved Flexion » ou IF (Flexion améliorée), voire 160 kPa, pour un pneumatique « Very High Flexion » ou VF (Flexion très élevée).

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route.

Une préoccupation constante des fabricants de pneumatiques pour véhicule agricole est, vis-à-vis de l'utilisation du pneumatique en champ, l'amélioration de la traction sur sol meuble tout en limitant au maximum la compaction du sol par le pneumatique, susceptible de nuire aux cultures. Ainsi le document US 2006124215A1 vise à diminuer les endommagements des cultures notamment dus au compactage ou à l'écrasement du fait du passage de l'engin agricole.

C'est la raison pour laquelle, dans le domaine agricole, des pneumatiques à basse pression, donc à forte flexion, ont été développés. La norme de l'ETRTO distingue ainsi les pneumatiques IF (Improved Flexion), avec une pression de gonflage minimale recommandée généralement égale à 240 kPa, et les pneumatiques VF (Very high Flexion), avec une pression de gonflage minimale recommandée généralement égale à 160 kPa. Selon la norme, par rapport à un pneumatique standard, un pneumatique IF a une capacité de charge augmentée de 20%, et un pneumatique IF a une capacité de charge augmentée de 40%, pour une pression de gonflage égale à 160 kPa.

Il est connu que l'augmentation de la traction sur sol meuble et la diminution de la compaction des sols sont principalement pilotées par la pression dans l'aire de contact du pneumatique avec le sol, la pression dans l'aire de contact étant elle-même pilotée en grande partie, mais pas uniquement, par la pression de gonflage.

En effet la pression de gonflage confère au pneumatique une rigidité pneumatique qui vient s'ajouter à sa rigidité structurelle. Ainsi la rigidité globale du pneumatique résulte de la combinaison d'une rigidité pneumatique et d'une rigidité structurelle. Par conséquent, dans un usage à basse pression où la rigidité pneumatique devient faible, la rigidité structurelle du pneumatique apporte une contribution significative à la pression dans l'aire de contact.

Par conséquent, pour diminuer la pression dans l'aire de contact d'un pneumatique à basse pression, il faut diminuer la rigidité structurelle du pneumatique, et en particulier toutes les rigidités de flexion permettant sa mise à plat, à la fois dans la direction circonférentielle, tangente à la circonférence du pneumatique, et dans la direction axiale, parallèle à l'axe de rotation du pneumatique.

Sur un plan structurel, comme tout pneumatique, un pneumatique pour véhicule agricole comprend une bande de roulement, destinée à venir en contact avec un sol par l'intermédiaire d'une surface de roulement, correspondant à sa surface de contact sur un sol rigide, et dont les deux extrémités axiales sont reliées par l'intermédiaire de deux flancs à deux bourrelets assurant la liaison mécanique entre le pneumatique et la jante sur laquelle il est destiné à être monté.

Dans ce qui suit, les directions circonférentielle (ou longitudinale), axiale (ou transversale) et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique. Un plan radial (ou méridien) est défini par une direction radiale et la direction axiale, et contient l'axe de rotation du pneumatique. Un plan circonférentiel est défini par une direction radiale et une direction circonférentielle, et est donc perpendiculaire à l'axe de rotation du pneumatique. Le plan circonférentiel passant par le milieu de la bande de roulement est appelé plan équatorial (ou médian).

La bande de roulement d'un pneumatique pour véhicule agricole comprend des éléments en relief, appelés éléments de sculpture, s'étendant radialement vers l'extérieur à partir d'une surface portante jusqu'à la surface de roulement, et séparés les uns des autres par des creux.

La bande de roulement peut être définie géométriquement, selon la direction axiale, par une largeur axiale L, et, selon une direction radiale, par une hauteur radiale H. La largeur axiale L est la distance mesurée entre les deux points d'extrémités axiales de la bande de roulement, entrant en contact avec un sol rigide, lorsque le pneumatique, gonflé à sa pression nominale Pn, est écrasé sous sa charge nominale Zn, ces valeurs nominales étant des valeurs de service recommandées définies, par exemple, par la norme de l'ETRTO. La largeur axiale L peut être définie en pourcentage de la largeur de section nominale B de pneumatique ou « design section width » définie dans la norme de l'ETRTO. La hauteur radiale H de la bande roulement, mesurée selon une direction radiale, est la hauteur maximale des éléments de sculpture, ou, de façon équivalente, la profondeur maximale des creux séparant les éléments de sculpture. La hauteur radiale H de la bande roulement est au moins égale à 20 mm, souvent au moins égale à 50 mm et le plus souvent au moins égale à 60 mm.

La proportion de creux de la bande de roulement est de façon usuelle quantifiée par un taux d'entaillement volumique global TEV, défini comme le ratio entre le volume VC de creux et le volume total V de la bande de roulement supposée sans creux correspondant au volume géométrique délimité par la surface de roulement et la surface portante, parallèle à la surface de roulement et tangente aux fonds des creux les plus profonds. La distance radiale entre la surface de roulement et la surface portante définit donc la hauteur radiale H de la bande de roulement. La surface de roulement variant avec l'usure de la bande de roulement, le taux d'entaillement volumique global TEV est généralement, mais pas obligatoirement, variable avec le niveau d'usure. Ainsi, le taux d'entaillement volumique global TEV peut être défini pour un état neuf ou pour un état d'usure donné. A titre d'exemple, un pneumatique pour roue motrice de tracteur agricole à l'état neuf a un taux d'entaillement volumique global TEV au moins égal à 30%, souvent au moins égal à 50% et le plus souvent au moins égal à 60%. Dans ce qui suit, l'expression « taux d'entaillement volumique global TEV » signifie implicitement « taux d'entaillement volumique global TEV à l'état neuf ».

Les éléments de sculpture d'une bande de roulement pour véhicule agricole ont usuellement, mais pas obligatoirement, la forme de barrettes. Une barrette a généralement une forme allongée globalement parallélépipédique, continue ou discontinue, est constituée d'au moins une portion rectiligne ou curviligne, et s'étend axialement à partir d'une zone médiane de la bande de roulement jusqu'à ses extrémités axiales ou épaules. Une barrette est séparée des barrettes adjacentes par des creux ou sillons. Les barrettes sont réparties circonférentiellement avec un pas constant ou variable et sont généralement disposées de part et d'autre du plan équatorial du pneumatique, de manière à former un motif en V appelé également motif en chevron, la pointe du motif en V étant destinée à entrer la première dans la surface de contact avec le sol. Les barrettes présentent généralement une symétrie par rapport au plan équatorial du pneumatique, avec le plus souvent un décalage circonférentiel entre les deux rangées de barrettes, obtenu par une rotation autour de l'axe du pneumatique d'une moitié de la bande de roulement par rapport à l'autre moitié de la bande de roulement.

Un pneumatique radial pour véhicule agricole comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange à base d'élastomère et parallèles entre eux. Lorsque les renforts de couche de sommet forment, avec la direction circonférentielle, un angle au plus égal à 10°, ils sont dits circonférentiels, ou sensiblement circonférentiels, et assurent une fonction de frettage limitant les déformations radiales du pneumatique. Lorsque les renforts de couche de sommet forment, avec la direction circonférentielle, un angle au moins égal à 10° et le plus souvent au plus égal à 30°, ils sont appelés renforts à angle et ont une fonction de reprise des efforts transversaux, parallèles à la direction axiale, appliqués au pneumatique. Les renforts de couche de sommet peuvent être constitués par un assemblage de brins multifilamentaires en matériaux polymériques de type textiles, tels qu'un polyester, par exemple un polyéthylène téréphtalate (PET), un polyamide aliphatique, par exemple un nylon, un polyamide aromatique, par exemple l'aramide, ou encore la rayonne, ou par un assemblage de fils en matériau métallique, tels que l'acier. A titre d'exemple non limitatif, l'armature de sommet d'un pneumatique pour véhicule agricole fonctionnant à basse pression comprend souvent entre 4 et 6 couches de sommet avec des renforts en polyester.

L'armature de carcasse d'un pneumatique radial pour véhicule agricole comprend au moins une couche de carcasse reliant les deux bourrelets entre eux. Les renforts d'une couche de carcasse sont sensiblement parallèles entre eux et forment, avec la direction circonférentielle, un angle compris entre 75° et 105°, de préférence entre 85° et 95°. Une couche de carcasse comprend des renforts le plus souvent textiles, enrobés par un matériau polymérique à base d'élastomère, appelé usuellement mélange d'enrobage. Lorsque l'armature de carcasse comprend plusieurs couches de carcasse, les renforts respectifs de deux couches de carcasse consécutives, c'est-à-dire adjacentes entre elles, sont croisés d'une couche de carcasse à la suivante.

Une diminution de la rigidité structurelle du pneumatique, et, par conséquent, une mise à plat facilitée du sommet du pneumatique a pu être obtenue par une limitation de la hauteur radiale H de la bande de roulement et par la mise en place de creux, dans la bande de roulement, au voisinage de ses extrémités axiales, ces creux faisant office de charnières lors de la mise à plat de la bande de roulement. Ce type de conception est classiquement utilisé pour une bande de roulement de pneumatique à basse pression.

Une diminution de la rigidité structurelle du pneumatique, et, par conséquent, une mise à plat facilitée du sommet du pneumatique a pu également être obtenue par une diminution du nombre de couches de sommet de l'armature de sommet, permettant une réduction de l'épaisseur de l'armature de sommet. Pour conserver la même résistance à rupture de l'armature de sommet, la réduction du nombre de couches de sommet a nécessité de remplacer les renforts textiles usuels en PET ou en nylon, par des renforts avec une résistance à rupture plus élevée, tels que des renforts en aramide ou en acier. A titre d'exemple, une armature de sommet constituée par 4 couches de sommet à renforts en PET a pu être remplacée par une armature de sommet de résistance à rupture équivalente constituée par 2 couches de sommet à renforts en acier.

Les inventeurs se sont donnés pour objectif, pour un pneumatique fonctionnant à basse pression tel qu'un pneumatique IF (Improved Flexion) ou un pneumatique VF (Very High Flexion) sur un sol meuble, de diminuer la compaction du sol et d'augmenter la capacité de traction par une diminution de la rigidité structurelle du pneumatique.

Cet objectif est atteint, selon l'invention, par un pneumatique selon la revendication 1.

L'invention est essentiellement caractérisée par le choix d'une armature de carcasse à couche de carcasse unique comprenant des renforts textiles, ayant une épaisseur moyenne limitée et une résistance à rupture Fr garantissant un niveau de sécurité attendu. Une telle armature de carcasse dite monocouche a une basse rigidité structurelle, permettant, pour un pneumatique fonctionnant à basse pression sur un sol meuble, de diminuer la compaction du sol et d'augmenter la capacité de traction.

Une telle armature de carcasse à basse rigidité structurelle est d'autant plus efficace vis-à-vis de la compaction et la traction, qu'elle est associée à une bande de roulement présentant préférentiellement les caractéristiques décrites ci-après. La bande de roulement n'est pas trop épaisse, avec une hauteur radiale H limitée au moins égale à 20 mm et au plus égale à 60mm. La bande de roulement est ouverte, avec un taux d'entaillement volumique global TEV au moins égal à 30% et au plus égal à 60%. La bande de roulement a une mise à plat facilitée par la présence d'au moins deux creux axialement extérieurs, ayant chacun une ligne moyenne formant, avec une direction circonférentielle du pneumatique, un angle au plus égal à 45°, positionnés de part et d'autre d'un plan équatorial médian passant par le milieu de la bande de roulement et distants entre eux d'une distance axiale moyenne L1 au moins égale à 0.5*L, lesdits creux jouant le rôle de charnières. En d'autres termes, les deux creux axialement extérieurs sont sensiblement longitudinaux et axialement distants l'un de l'autre, en moyenne, d'une distance au moins égale à 0.5*L.

Toute couche de carcasse est radiale ou sensiblement radiale, c'est-à-dire comprend des renforts textiles enrobés dans un matériau à base d'élastomère, parallèles entre eux, et formant, avec une direction circonférentielle du pneumatique, un angle au moins égal à 75° et au plus égal à 105°, et le plus souvent un angle au moins égal à 85° et au plus égal à 95°.

Selon une première caractéristique essentielle de l'invention, l'armature de carcasse est constituée d'une unique couche de carcasse ayant une épaisseur moyenne E au plus égale à 2 mm.

Une couche de carcasse est une structure composite constituée par une juxtaposition de renforts parallèles entre eux et enrobés dans un matériau à base d'élastomère, appelé mélange d'enrobage. La couche de carcasse relie les deux bourrelets du pneumatique en s'ancrant dans chaque bourrelet à un élément de renforcement circonférentiel, constitué le plus souvent par un assemblage de fils métalliques appelé tringle. L'épaisseur de la couche de carcasse varie selon la zone du pneumatique, du fait de la conformation géométrique à laquelle la couche de carcasse est soumise au cours de la fabrication du pneumatique. Dans une coupe méridienne donnée du pneumatique, cette épaisseur est maximale radialement à l'intérieur de la tringle et minimale radialement à l'intérieur de l'armature de sommet. Il est usuel de mesurer l'épaisseur de la couche de carcasse radialement à l'intérieur de la tringle, c'est-à-dire l'épaisseur maximale. En outre l'épaisseur mesurée est une épaisseur dite arasée, correspondant sensiblement au diamètre des renforts, sans prise en compte des épaisseurs de mélange d'enrobage présent radialement de part et d'autre des renforts. Par ailleurs cette épaisseur, appelée communément épaisseur sous tringle, peut varier selon la direction circonférentielle du pneumatique. En pratique, cette épaisseur peut être mesurée dans divers plans méridiens, répartis sur la circonférence du pneumatique, par exemple dans 4 plans méridiens équirépartis sur la circonférence. Par conséquent, il est possible d'en déduire une épaisseur moyenne sur la circonférence du pneumatique. C'est cette épaisseur moyenne, mesurée sous la tringle, qui doit rester inférieure à 2 mm, dans le cadre de l'invention.

Selon une deuxième caractéristique essentielle de l'invention, l'armature de carcasse est constituée d'une unique couche de carcasse ayant une résistance à rupture Fr, exprimée en daN/cm, vérifiant la relation :

$$Fr >= Fs = (Cs * Pmax * 10^{-3}) * ((R^2 - ((R+Rj)/2)^2)/2)/Rj,$$

avec

- Fs : résistance de référence seuil (en daN/cm)
- Cs : coefficient de sécurité au moins égal à 1,

- Pmax : pression maximale de gonflage recommandée (en kPa),
- R=D/2 : rayon extérieur du pneumatique (en mm),
- Rj=Dj/2 : rayon nominal de la jante (en mm).

Le matériau composite constitutif de la couche de carcasse peut être caractérisé mécaniquement par une loi de comportement en extension, représentant l'effort de traction (en daN/cm), appliqué au matériau composite, en fonction de son allongement relatif (en %). Le point limite de cette loi de comportement correspond à la résistance à rupture Fr dudit matériau composite. Selon l'invention, la résistance à rupture Fr ainsi déterminée doit être au moins égale à un résistance de référence seuil Fs égale à $(Cs*Pmax*10^{-3})*((R^2-((R+Rj)/2)^2)/2)/Rj$.

Dans l'expression de cette résistance de référence seuil Fs, Pmax représente la pression maximale de gonflage maximale recommandée, exprimée en kPa. En effet, pour avoir une liaison correcte entre le pneumatique et la jante, garantissant en particulier l'absence de rotation du pneumatique sur sa jante sous l'action d'un couple, il est nécessaire d'avoir un serrage correct du talon de chaque bourrelet du pneumatique sur la jante. Un pneumatique agricole ayant une pression de gonflage en utilisation relativement faible, il est nécessaire, pour bien positionner les talons lors du montage du pneumatique sur sa jante, d'utiliser une pression de gonflage généralement supérieure à la pression d'utilisation. De ce fait, pour des raisons de sécurité évidente, c'est-à-dire pour éviter un éclatement du pneumatique lors du montage, il est nécessaire de limiter la pression de gonflage au montage à une valeur maximale admissible Pmax, recommandée par les fabricants de pneumatiques. Par exemple, pour un pneumatique IF (Improved Flexion), les fabricants de pneumatiques peuvent recommander une pression de gonflage maximale Pmax égale à 250 kPa, pour réaliser un montage correct du pneumatique sur sa jante. La pression de gonflage est ensuite ajustée en fonction de l'utilisation. Le coefficient de sécurité Cs, au moins égal à 1, est choisi par le concepteur du pneumatique, en fonction du niveau de sécurité recherché. R est le rayon extérieur du pneumatique, exprimé en mm et égal à la moitié du diamètre extérieur D du pneumatique, défini comme le « Design Overall Diameter » (Diamètre de conception hors tout) dans la section consacrée aux « Agricultural equipment tyres » du « Standards Manual-2018 » de la norme de l'ETRTO. Rj est le rayon nominal de la j ante, exprimé en mm et égal à la moitié du diamètre nominal Dj de la jante défini comme le diamètre au « seat » de la j ante, le « seat » étant la portion de jante en contact avec la partie radialement intérieure du bourrelet, ce diamètre au « seat » étant défini comme le « Nominal Rim Diameter » (Diamètre nominal de la jante), dans la section consacrée aux « Agricultural equipment tyres » du « Standards Manual-2018 » de la norme de l'ETRTO. Enfin, le terme « (R+Rj)/2 » est le rayon moyen du pneumatique, défini comme la moyenne du rayon extérieur du pneumatique et du rayon nominal de la jante.

Préférentiellement Cs*Pmax est au moins égal à 1000 kPA, dans l'expression de la résistance de référence seuil Fs. Dans ce cas, la valeur de Cs*Pmax est au moins égale à la valeur maximale de la pression de gonflage délivrable par un compresseur usuel utilisé pour le gonflage d'un pneumatique pour véhicule agricole.

Encore plus préférentiellement Cs*Pmax est au moins égal à 1500 kPA, dans l'expression de la résistance de référence seuil Fs. Dans ce cas, la valeur de Cs*Pmax est au moins égale à 1.5 fois la valeur maximale de la pression de gonflage délivrable par un compresseur usuel utilisé pour le gonflage d'un pneumatique pour véhicule agricole. Par conséquent la résistance de référence seuil Fs est augmentée d'au moins 50% par rapport au cas précédent.

Avantageusement l'épaisseur moyenne E de la couche de carcasse est au plus égale à 1.2 mm. Plus cette épaisseur moyenne est limitée, plus la rigidité structurelle de l'armature de carcasse est basse.

Le plus souvent les renforts textiles de l'unique couche de carcasse forment, avec la direction circonférentielle du pneumatique, un angle au moins égal à 85° et au plus égal à 95°. En d'autres termes l'armature de carcasse est quasi parfaitement radiale.

Préférentiellement les renforts textiles de l'unique couche de carcasse comprennent un assemblage constitué d'au moins un brin multifilamentaire en polyamide aromatique ou copolyamide aromatique et/ou en polyamide aliphatique et/ou en polyester et/ou en cellulose.

Un brin multifilamentaire en polyamide aromatique ou copolyamide aromatique est luimême constitué par un assemblage de filaments en polyamide aromatique ou copolyamide aromatique. Un filament en polyamide aromatique ou copolyamide aromatique est, de manière connue, un filament de macromolécules linéaires formées de groupes aromatiques liés entre eux par des liaisons amides dont au moins 85% d'entre elles sont directement liées à deux noyaux aromatiques, et plus particulièrement une fibre en poly (p-phénylène téréphtalamide) (ou PPTA), fabriquée à partir de compositions de filage optiquement anisotropes. Parmi les polyamides aromatiques ou copolyamides aromatiques, on peut citer les polyarylamides (ou PAA, notamment connus sous la dénomination commerciale Ixef de la société Solvay), le poly(métaxylylène adipamide), les polyphtalamides (ou PPA, notamment connus sous la dénomination commerciale Amodel de la société Solvay), les polyamides semi-aromatiques amorphes (ou PA 6-3T, notamment connus sous la dénomination commerciale Trogamid de la société Evonik), les méta-aramides (ou poly(métaphénylène isophtalamide ou PA MPD-I notamment connus sous la dénomination commerciale Nomex de la société Du Pont de Nemours) ou les para-aramides (ou poly(paraphénylène téréphtalamide ou PA PPD-T notamment connus sous la dénomination commerciale Kevlar de la société Du Pont de Nemours ou Twaron de la société Teijin).

Un brin multifilamentaire en polyamide aliphatique est constitué par un assemblage de filaments en polyamide aliphatique. Par filament en polyamide aliphatique, on entend un filament de macromolécules linéaires de polymères ou copolymères contenant des fonctions amides ne présentant pas de cycles aromatiques et pouvant être synthétisées par polycondensation entre un acide carboxylique et une amine. Parmi les polyamides aliphatiques, on peut citer les nylons PA4.6, PA6, PA6.6 ou encore PA6.10, et notamment le Zytel de la société DuPont, le Technyl de la société Solvay ou le Rilsamid de la société Arkema.

Encore plus préférentiellement les renforts textiles de l'unique couche de carcasse sont des renforts textiles hybrides comprenant un assemblage constitué d'au moins un brin multifilamentaire en polyamide aromatique ou copolyamide aromatique et d'au moins un brin multifilamentaire en polyamide aliphatique.

Dans le cas où les renforts textiles de l'unique couche de carcasse comprennent un assemblage constitué d'au moins un brin multifilamentaire en polyamide aromatique ou copolyamide aromatique et/ou en polyamide aliphatique et/ou en polyester et/ou en cellulose, ou, encore plus préférentiellement, sont des renforts textiles hybrides comprenant un assemblage constitué d'au moins un brin multifilamentaire en polyamide aromatique ou copolyamide aromatique et d'au moins un brin multifilamentaire en polyamide aliphatique, la couche de carcasse, dans son état vulcanisé et extraite du pneumatique, a une loi de comportement en extension ayant un module sécant M1 à la force équivalente développée par la couche de carcasse à 1% d'allongement, tel que le rapport M1/Fr du module sécant M1 à la force équivalente développée par la couche de carcasse à 1% d'allongement sur la résistance à rupture Fr de la couche de carcasse est strictement inférieur à 7, de préférence inférieur ou égal à 5, et plus préférentiellement, inférieur ou égal à 4.

Une couche de carcasse étant constituée par une juxtaposition de renforts textiles, enrobés dans un matériau à base d'élastomère, parallèles entre eux et répartis selon un pas P, le module sécant M1 à la force équivalente développée par la couche de carcasse à 1% d'allongement est défini comme le rapport MC1/P entre le module sécant MC1 à la force équivalente développée par un renfort textile à 1% d'allongement, exprimé en daN/%, et le pas P, exprimé en cm. Plus précisément le pas P est la distance entre les fibres moyennes respectives de deux renforts consécutifs. Dans le cas usuel d'une couche de carcasse s'enroulant autour d'un élément de renforcement circonférentiel ou tringle, pour former un retournement, le pas P est mesuré au niveau de la portion de couche de carcasse radialement intérieure à la tringle, celle-ci ayant une conformation quasi-nulle en fabrication, c'est-à-dire sans variation significative du pas par rapport à l'état initial. Le module sécant M1 est, par conséquent, exprimé en daN/cm/%. Le module sécant MC1 à la force équivalente développée par un renfort textile à 1% d'allongement est la pente de la droite reliant l'origine de la courbe « Force-Allongement » obtenue, pour un renfort textile unitaire, dans les conditions de la norme ASTM D 885/D 885M - 10a de 2014 au point d'abscisse 1% de cette même courbe.

La résistance à rupture Fr de la couche de carcasse, exprimée en daN/cm, est définie comme le rapport FCr/P entre la force à rupture FCr d'un renfort textile, exprimée en daN, et le pas P, exprimé en cm. La force à rupture FCr d'un renfort textile est la force limite de la courbe « Force-Allongement » du renfort textile, obtenue dans les conditions de la norme ASTM D 885/D 885M - 10a de 2014.

Le rapport M1/Fr permet avantageusement de quantifier la rigidité de la couche de carcasse en fonction de sa résistance à rupture à l'aide d'un critère adimensionnel, valable sur l'ensemble des dimensions de pneumatique usuelles dans le domaine agricole.

Un rapport M1/Fr supérieur à 7 rendrait la conformation de la couche de carcasse difficile, au cours du moulage du pneumatique avant l'étape de cuisson du pneumatique, avec un risque de désorganisation de la couche de carcasse par passage des renforts textiles à travers le mélange d'enrobage desdits renforts textiles.

Avantageusement le rapport M1/Fr du module sécant M1 à la force équivalente développée par la couche de carcasse à 1% d'allongement sur la résistance à rupture Fr de la couche de carcasse est supérieur ou égal à 0.5.

Un rapport M1/Fr inférieur à 0.5 rendrait la manutention de la couche de carcasse difficile, au cours de la fabrication du pneumatique, en raison d'une trop faible rigidité de ladite couche de carcasse.

Selon une première variante de réalisation, les renforts textiles hybrides de la couche de carcasse comprennent un assemblage constitué de deux brins multifilamentaires en polyamide aromatique ou copolyamide aromatique, et d'un unique brin multifilamentaire en polyamide aliphatique, les brins étant enroulés ensemble en hélice.

Cette première variante de réalisation permet d'obtenir un bon compromis entre résistance à rupture et coût industriel. Une résistance à rupture élevée est obtenue grâce à l'utilisation d'un renfort comprenant 75% de polyamide aromatique généralement de l'aramide, l'aramide permettant de constituer des brins multifilamentaires à haute ténacité. En outre, sur le plan économique, la première variante de réalisation a une structure d'assemblage permettant une productivité correcte en fabrication sur les machines de retordage des renforts textiles.

Selon une deuxième variante de réalisation, les renforts textiles hybrides de la couche de carcasse comprennent un assemblage constitué d'un unique brin multifilamentaire en polyamide aromatique ou copolyamide aromatique, et d'un unique brin multifilamentaire en polyamide aliphatique, les brins étant enroulés ensemble en hélice.

Cette deuxième variante de réalisation, qui contient seulement 60% de polyamide aromatique ou aramide, au lieu de 75%, est moins performante que la première variante de réalisation en termes de résistance à rupture. En revanche, elle a un coût de matière inférieur à celui de la première variante de réalisation. Par ailleurs, en raison de la structure de son assemblage, elle permet une haute productivité en fabrication sur les machines de retordage des renforts textiles, d'où un coût de fabrication moins élevé. Par conséquent, le coût industriel global de cette deuxième variante de réalisation est moins élevé que celui de la première variante de réalisation.

Selon une troisième variante de réalisation, les renforts textiles hybrides de la couche de carcasse comprennent un assemblage constitué d'une âme constituée d'un premier brin multifilamentaire en polyamide aliphatique, et d'une couche comprenant au moins deux deuxièmes brins multifilamentaires en polyamide aromatique ou copolyamide aromatique, les deuxièmes brins de la couche étant enroulés ensemble en hélice autour de l'âme.

Cette troisième variante est un renfort textile hybride appelé usuellement renfort textile hybride à « Core Insertion », c'est-à-dire avec insertion d'une âme au sein d'une couche de brins multifilamentaires. La construction d'un tel renfort est flexible et polyvalente et permet, en particulier, d'ajuster le module sécant M1 par un choix approprié des paramètres de retordage et de traitement thermique d'encollage. En revanche, du fait de la structure de l'assemblage, la fabrication d'un renfort textile hybride est plus onéreuse que les deux variantes de réalisation précédemment décrites.

Avantageusement, chaque couche de sommet ayant une loi de comportement en extension caractérisée par un module sécant à la rupture M'=F'r/A'r (en daN/cm/%), F'r étant la résistance à rupture de la couche de sommet (en daN/cm) et A'r son allongement à rupture (en %), l'armature de sommet, comprenant au moins deux couches de sommet, ayant chacune un module sécant à la rupture M', a un module à la rupture résultant M's, défini comme la somme des modules sécants à la rupture M' de l'ensemble des couches de sommet, au moins égal à 150 daN/cm/%, de préférence au moins égal à 300 daN/cm/%.

Une armature de sommet suffisamment rigide, avec un module sécant à la rupture M's au moins égal à 150 daN/cm/%, permet de garantir une poussée transversale correcte du pneumatique, et, par conséquent, un comportement en champ satisfaisant, malgré une basse pression de gonflage du pneumatique.

Préférentiellement les renforts des au moins deux couches de sommet de l'armature de sommet sont métalliques.

L'utilisation de renforts métalliques pour les couches de sommet permet d'atteindre aisément le minimum de rigidité transversale requis pour l'armature de sommet, en minimisant le nombre de couches de sommet donc la rigidité structurelle de flexion vis-à-vis de la mise à plat de la bande de roulement.

Encore plus préférentiellement, les renforts métalliques des au moins deux couches de sommet de l'armature de sommet ont une loi de comportement bi-élastique comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée pour un renfort métallique enrobé dans un mélange élastomérique ayant un module d'élasticité en extension à 10% d'allongement MA10 au moins égal à 5 MPa et au plus égal à 15 MPa, et tout renfort métallique de couche de sommet a une loi de comportement en compression, caractérisée par une déformation critique de flambage en compression E0 au moins égale à 3%, ladite loi de comportement en compression étant déterminée sur une éprouvette constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa.

Cette variante préférentielle d'armature de sommet avec au moins deux couches de sommet avec des renforts métalliques est donc caractérisée par l'utilisation de renforts métalliques élastiques dont les lois de comportement ont des caractéristiques spécifiques à la fois en extension et en compression.

En ce qui concerne sa loi de comportement en extension, un renfort métallique est caractérisé mécaniquement, usuellement dans un état nu, c'est-à-dire non enrobé par un matériau élastomérique, par une courbe représentant la force de traction (en N), appliquée au renfort métallique, en fonction de son allongement relatif (en %), dite courbe force-allongement. De cette courbe force-allongement sont déduites des caractéristiques mécaniques en extension du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées, par exemple, selon la norme ISO 6892 de 1984 ou la norme ASTM D2969-04 de 2014.

En pratique, un renfort métallique, extrait du pneumatique, est enrobé dans un matériau à base d'élastomère vulcanisé. On peut déterminer la loi de comportement de ce renfort métallique extrait du pneumatique, et donc enrobé, sur la base de la norme ISO 6892 de 1984 comme pour un renfort métallique nu. A titre d'exemple, et de façon non exhaustive, le matériau élastomérique d'enrobage vulcanisé est une composition à base de caoutchouc ayant un module d'élasticité en extension sécant à 10% d'allongement MA10 au moins égal à 5 MPa et au plus égal à 15 MPa, par exemple égal à 6 MPa, ce module d'élasticité en extension étant déterminé à partir d'essais de traction réalisés conformément à la norme française NF T 46-002 de septembre 1988.

A partir de la courbe force-allongement, caractérisant le comportement en extension du renfort, on peut définir une courbe contrainte-déformation, la contrainte étant égale au rapport entre la force de traction appliquée au renfort et la surface de la section du renfort, et la déformation étant l'allongement relatif du renfort. Pour une loi de comportement élastique bi-module comprenant une première portion et une deuxième portion, on peut définir ainsi un premier module en extension MG1, représentant la pente de la droite sécante passant par l'origine du repère, dans lequel est représentée la loi de comportement, et le point de transition entre la première et la deuxième portion. De même, on peut définir un deuxième module en extension MG2, représentant la pente d'une droite passant par deux points positionnés dans une partie sensiblement linéaire de la deuxième portion.

Dans la variante préférentielle de renforts métalliques considérée, tout renfort métallique de couche de sommet, extrait du pneumatique, a ainsi une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1.

En ce qui concerne son comportement en compression, un renfort métallique est caractérisé mécaniquement par une courbe représentant la force de compression (en N), appliquée au renfort métallique, en fonction de sa déformation en compression (en %). Une telle courbe en compression est en particulier caractérisée par un point limite, défini par une force critique de flambage Fc et une déformation critique de flambage E0, au-delà duquel le renfort est soumis à un flambage en compression, correspondant à un état d'instabilité mécanique caractérisé par de grandes déformations du renfort avec une diminution de l'effort de compression.

La loi de comportement en compression est déterminée, à l'aide d'une machine de test de type Zwick ou Instron, sur une éprouvette de dimensions 12 mm x 21 mm x 8 mm (largeur x hauteur x épaisseur). L'éprouvette est constituée par un renfort, placé en son centre et enrobé par un volume parallélépipédique de mélange élastomérique définissant le volume de l'éprouvette, l'axe du renfort étant placé selon la hauteur de l'éprouvette. Dans le contexte de l'invention, le mélange élastomérique de l'éprouvette a un module d'élasticité en extension sécant à 10% d'allongement MA10 au moins égal à 5 MPa et au plus égal à 15 MPa, par exemple égal à 6 MPa. L'éprouvette est comprimée dans le sens de la hauteur. à une vitesse de 3 mm / mn jusqu'à une déformation en compression, c'est-à-dire un écrasement de l'éprouvette égale à 10% de sa hauteur initiale, à température ambiante. La force critique de flambage Fc et la déformation critique de flambage E0 correspondante sont atteintes lorsque l'effort appliqué diminue alors que la déformation continue à augmenter. En d'autres termes la force critique de flambage Fc correspond à la force de compression maximale Fmax.

Dans la variante préférentielle de renforts métalliques considérée, tout renfort métallique de couche de sommet a une loi de comportement en compression, caractérisée par une déformation critique de flambage en compression E0 au moins égale à 3%.

Les inventeurs ont montré que des renforts métalliques dits élastiques, caractérisés par des lois de comportement en extension et en compression telles que précédemment décrites, ont une limite d'endurance en fatigue, lors de cycles répétés alternativement en extension et en compression, supérieure à celle des renforts métalliques usuels.

En effet, lors du roulage d'un pneumatique pour véhicule agricole comprenant une bande de roulement avec des éléments en relief, par exemple des barrettes, le basculement des éléments en relief sous couple (moteur ou freineur) entraine un basculement des couches de sommet, positionnées radialement à l'intérieur des éléments en relief. Ce basculement entraîne des courbures alternativement positives et négatives des couches de sommet, et corrélativement des cycles alternativement en compression/extension des renforts métalliques des couches de sommet.

Il est à noter également que les couches de sommet d'un pneumatique pour véhicule agricole présentent souvent des courbures initiales, à la fois selon la direction circonférentielle et selon la direction axiale, résultant des mouvements des divers constituants élastomériques et des renforts au cours de la fabrication, lors du moulage et de la cuisson du pneumatique. Ces déformations initiales s'ajoutent aux déformations résultant du basculement des barrettes et contribuent donc également aux cycles en compression/extension des renforts métalliques des couches de sommet, lors du roulage du pneumatique.

Ainsi des renforts métalliques élastiques de couches de sommet selon cette variante préférentielle sont aptes à mieux supporter les cycles en compression/extension précédemment décrits, ce qui entraine une amélioration de l'endurance de l'armature de sommet du pneumatique, et donc une augmentation de la durée de vie du pneumatique.

Selon un mode de réalisation particulier de la variante préférée précédemment décrite, tout renfort métallique de couche de sommet est un câble multitoron de structure 1xN comprenant une unique couche de N torons enroulés en hélice, chaque toron comprenant une couche interne de M fils internes enroulés en hélice et une couche externe de P fils externes enroulés en hélice autour de la couche interne.

Selon une première variante de pneumatique à basse pression, le pneumatique pour véhicule agricole est un pneumatique IF (Improved Flexion) au sens de la norme de l'ETRTO, dans son « Standards Manual-2018 », dans la section consacrée aux « Agricultural equipment tyres ».

Selon une deuxième variante de pneumatique à basse pression, le pneumatique pour véhicule agricole est un pneumatique VF (Very high Flexion) au sens de la norme de l'ETRTO, dans son « Standards Manual-2018 », dans la section consacrée aux « Agricultural equipment tyres ».

Les caractéristiques de l'invention sont illustrées par les figures 1 à 8 schématiques et non représentées à l'échelle :

- Figure 1 : Demi-coupe méridienne d'un pneumatique pour véhicule agricole selon l'invention.

- Figure 2 : Vue en perspective d'un pneumatique pour véhicule agricole selon l'invention.
- Figure 3 : Vue en coupe d'une portion de couche de carcasse.
- Figure 4 : Loi de comportement en extension type d'une couche de carcasse comprenant des renforts textiles hybrides selon un mode de réalisation préféré de l'invention.
- Figure 5 : Section d'un renfort textile hybride pour couche de carcasse selon une première variante du mode de réalisation préféré de l'invention.
- Figure 6 : Section d'un renfort textile hybride pour couche de carcasse selon une deuxième variante du mode de réalisation préféré de l'invention.
- Figure 7 : Section d'un renfort textile hybride pour couche de carcasse selon une troisième variante du mode de réalisation préféré de l'invention.
- Figure 8 : Lois de comportement en extension respectives d'une couche de carcasse comprenant des renforts textiles hybrides selon deux variantes de réalisation de l'invention, et d'une couche de carcasse comprenant des renforts textiles de l'état de la technique pris en référence.

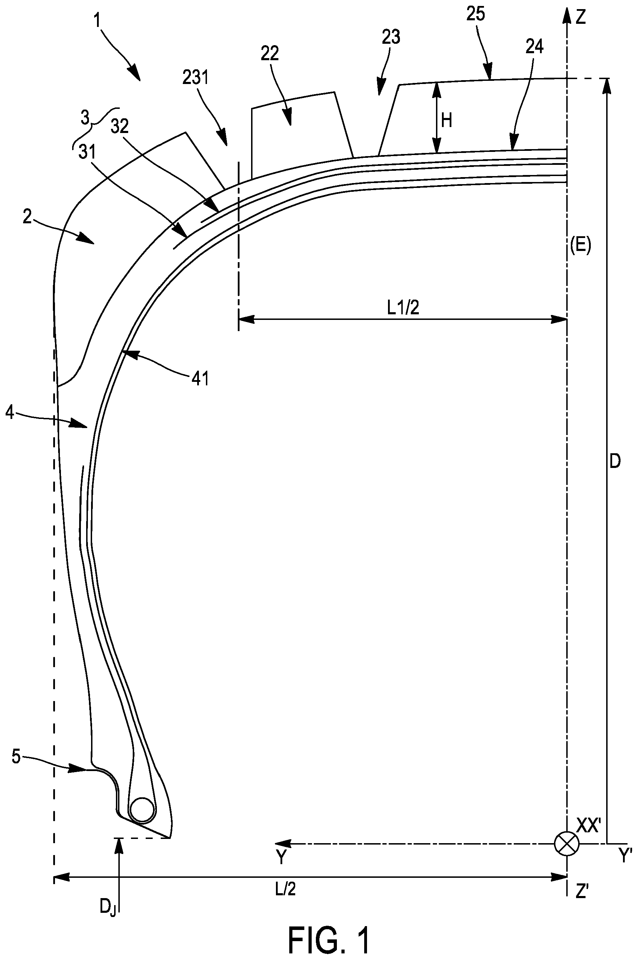

La figure 1 est une demi-coupe méridienne, dans un plan méridien YZ, d'un pneumatique 1 pour véhicule agricole selon l'invention. Le pneumatique 1 pour véhicule agricole est destiné à être monté sur une jante 5 ayant un diamètre nominal Dj et à être gonflé à une pression minimale recommandée au plus égale à 240 kPa. Il a un diamètre extérieur D et comprend, radialement de l'extérieur vers l'intérieur, une bande de roulement 2, une armature de sommet 3 et une armature de carcasse 4. La bande de roulement 2 comprend des éléments de sculpture 22 séparés les uns des autres par des creux 23 et a une hauteur radiale H au moins égale à 20 mm et au plus égale à 60 mm, mesurée entre une surface de roulement 25 et une surface portante 24 parallèle à la surface de roulement 25 et tangente aux fonds des creux les plus profonds. La bande de roulement 2 a une largeur axiale L et comprend deux creux sensiblement longitudinaux axialement extérieurs 231, positionnés de part et d'autre d'un plan équatorial XZ passant par le milieu de la bande de roulement 2 et distants entre eux d'une distance axiale moyenne L1 au moins égale à 0.5*L. Sur la demi-coupe de la figure, seules sont représentées la demi-largeur axiale L et la demi-distance L1/2 entre un creux longitudinal axialement extérieur 231 et le plan équatorial XZ. En outre la bande de roulement 2 a un taux d'entaillement volumique global TEV, défini comme le ratio entre le volume VC de creux 23 et le volume total V de la bande de roulement 2 supposée sans creux, compris entre la surface portante 24 et la surface de roulement 25, au moins égal à 30% et au plus égal à 60%. L'armature de sommet 3 comprend deux couches de sommet (31, 32), comprenant chacune des renforts enrobés dans un matériau à base d'élastomère, parallèles entre eux, croisés d'une couche à la suivante, et formant, avec une direction circonférentielle XX' du pneumatique, un angle au moins égal à 10°. L'armature de carcasse 4 comprend une unique couche de carcasse 41, comprenant des renforts textiles enrobés dans un matériau à base d'élastomère, parallèles entre eux, croisés d'une couche à la suivante, et formant, avec la direction circonférentielle XX' du pneumatique, un angle au moins égal à 85° et au plus égal à 95°.

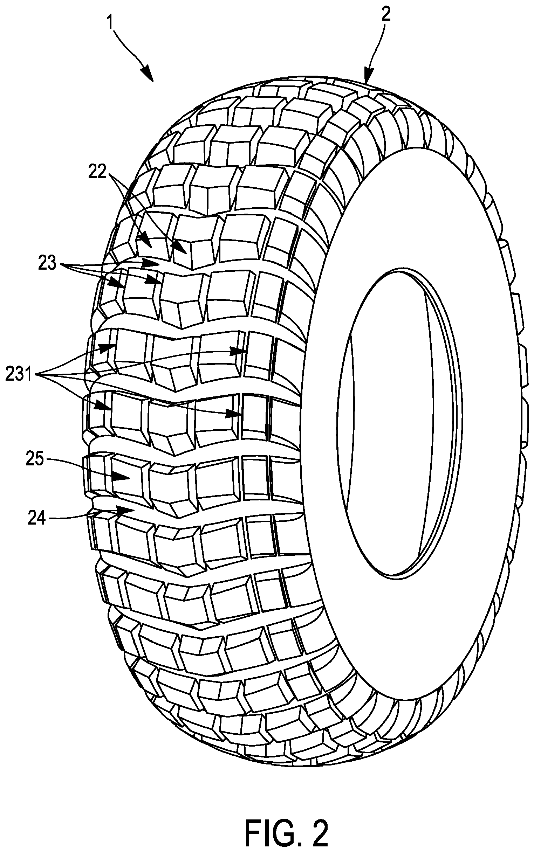

La figure 2 est une vue en perspective d'un pneumatique 1 pour véhicule agricole selon l'invention. La bande de roulement 2 comprenant des éléments de sculpture 22 séparés les uns des autres par des creux 23 et ayant une hauteur radiale H au moins égale à 20 mm et au plus égale à 60mm, mesurée entre une surface de roulement 25 et une surface portante 24 parallèle à la surface de roulement 25 et tangente aux fonds des creux les plus profonds. Dans le mode de réalisation représenté, les éléments en relief sont regroupés en cinq rangées circonférentielles de blocs. Les blocs 22 sont séparés les uns des autres par des creux 23 soit sensiblement longitudinaux, selon la direction circonférentielle, soit sensiblement transversaux, selon la direction axiale. La bande de roulement 2 comprend au moins deux distributions circonférentielles de creux sensiblement longitudinaux axialement extérieurs 231 jouant le rôle de charnières et facilitant la mise à plat de la bande de roulement. Enfin la bande de roulement 2 a une sculpture ouverte avec un taux d'entaillement volumique global TEV, défini comme le ratio entre le volume VC de creux 23 et le volume total V de la bande de roulement 2 supposée sans creux, compris entre la surface portante 24 et la surface de roulement 25, au moins égal à 30% et au plus égal à 60%.

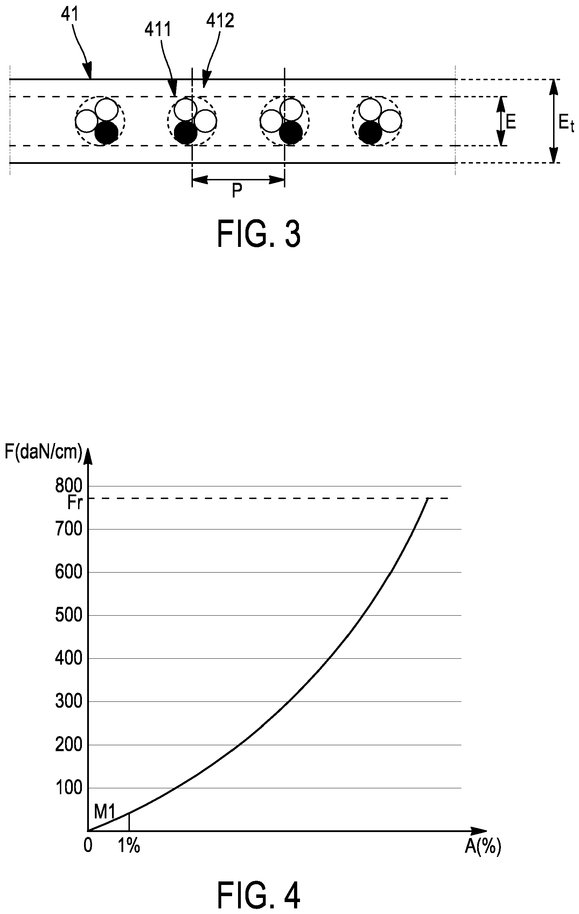

La figure 3 est une vue en coupe d'une portion de couche de carcasse 41, la coupe étant réalisée perpendiculairement à la direction des renforts 411. La couche de carcasse 41 comprend des renforts textiles enrobés 411 dans un matériau à base d'élastomère 412. Elle a une épaisseur totale Et et une épaisseur arasée E correspondant au diamètre des renforts. C'est une valeur moyenne de cette épaisseur arasée E qui, selon l'invention, doit être au moins égale à 2 mm. Cette épaisseur arasée E est mesurée sur la coupe de la portion de couche de carcasse. Sur la figure 2 est également représenté le pas P, distance entre les lignes moyennes de deux renforts consécutifs.

La figure 4 est une loi de comportement en extension type d'une couche de carcasse comprenant des renforts textiles hybrides selon un mode de réalisation préféré de l'invention. Cette loi de comportement représente la force en extension unitaire F, exprimée en daN/cm, appliquée à la couche de carcasse, en fonction de son allongement relatif A, exprimé en %. Dans l'exemple représenté, la résistance à rupture Fr est égale à 775 daN/cm. De plus, le module sécant M1 à la force équivalente développée par la couche de carcasse à 1% d'allongement est tel que le rapport M1/Fr du module sécant M1 sur la résistance à rupture Fr est égal 3.5, donc inférieur à 4.

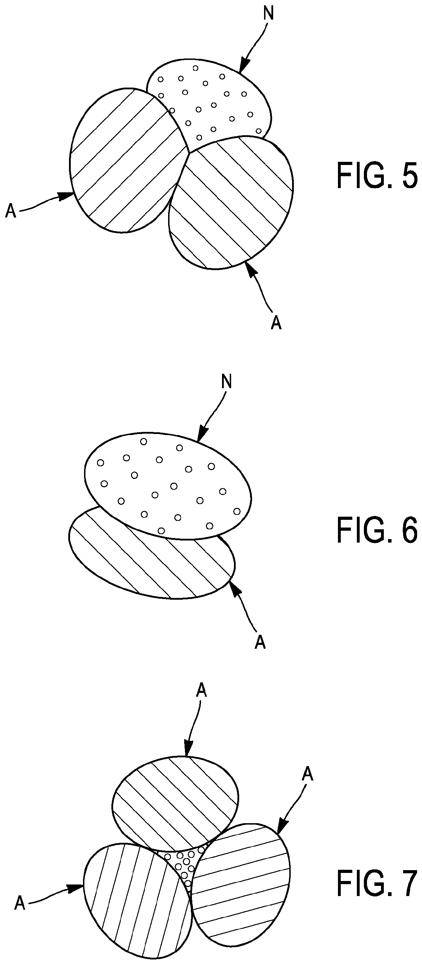

La figure 5 représente la section d'un renfort textile hybride pour couche de carcasse selon une première variante du mode de réalisation préféré de l'invention. Dans cette première variante, les renforts textiles hybrides de la couche de carcasse comprennent un assemblage (A/A/N) constitué de deux brins multifilamentaires en aramide (A), et d'un unique brin multifilamentaire en nylon (N), les brins étant enroulés ensemble en hélice.

La figure 6 représente la section d'un renfort textile hybride pour couche de carcasse selon une deuxième variante du mode de réalisation préféré de l'invention. Dans cette deuxième variante du mode de réalisation préféré de l'invention, les renforts textiles hybrides de la couche de carcasse comprennent un assemblage (A/N) constitué d'un unique brin multifilamentaire en aramide (A), et d'un unique brin multifilamentaire en nylon (N), les brins étant enroulés ensemble en hélice.

La figure 7 représente la section d'un renfort textile hybride pour couche de carcasse selon une troisième variante du mode de réalisation préféré de l'invention. Dans cette troisième variante, les renforts textiles hybrides de la couche de carcasse comprennent un assemblage (N+A/A/A) constitué d'une âme constituée d'un premier brin multifilamentaire en nylon (N), et d'une couche comprenant trois deuxièmes brins multifilamentaires en aramide (A), les deuxièmes brins de la couche étant enroulés ensemble en hélice autour de l'âme. Ce type de renfort textile hybride est usuellement appelé renfort « Core Insertion ».

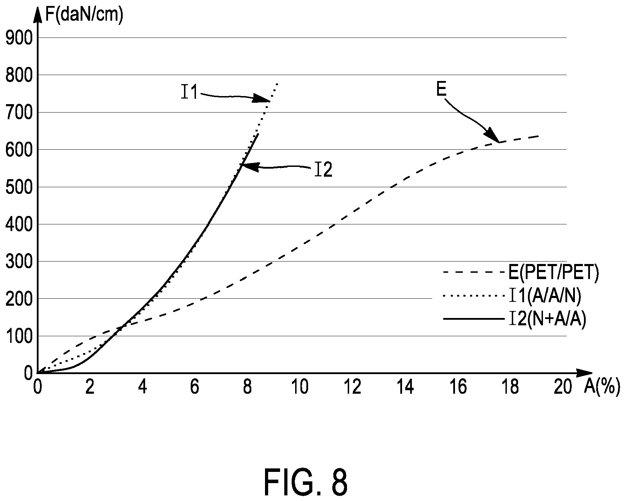

La figure 8 représente les lois de comportement en extension respectives d'une couche de carcasse comprenant des renforts textiles hybrides selon les variantes de réalisation, représentées sur les figures 5 et 7, et d'une couche de carcasse comprenant des renforts textiles de l'état de la technique pris en référence. Chaque loi de comportement représente la force en extension unitaire F, exprimée en daN/cm, appliquée à la couche de carcasse, en fonction de son allongement relatif A, exprimé en %. La loi de comportement I1 est relative à une couche de carcasse comprenant des renforts textiles hybrides comprenant un assemblage (A/A/N) constitué de deux brins multifilamentaires en aramide (A), et d'un unique brin multifilamentaire en nylon (N), les brins étant enroulés ensemble en hélice. La loi de comportement I2 est relative à une couche de carcasse comprenant des renforts textiles hybrides comprenant un assemblage (N+A/A/A) constitué d'une âme constituée d'un premier brin multifilamentaire en nylon (N), et d'une couche comprenant trois deuxièmes brins multifilamentaires en aramide (A), les deuxièmes brins de la couche étant enroulés ensemble en hélice autour de l'âme. La loi de comportement E est relative à une couche de carcasse comprenant des renforts textiles comprenant un assemblage (PET/PET) de deux brins multifilamentaires en polyester de type PET (polyethylene terephthalate) de l'état de la technique de référence. Pour les lois de comportement respectives I1 et I2, les modules sécants M1 à la force équivalente développée par la couche de carcasse à 1% d'allongement sont tels que les rapports M1/Fr du module sécant M1 sur la résistance à rupture Fr de la couche de carcasse, sont respectivement égaux à 3.5 et 0.8, et donc inférieurs à 4. Les résistances à rupture Fr sont respectivement égales à 775 daN/cm pour I1 et 641 daN/cm pour I2. Les valeurs précédentes sont à comparer à l'état de la technique de référence pour lequel le rapport M1/Fr est égal à 7.7, pour une résistance à rupture Fr égale à 213 daN/cm. Ainsi les couches de carcasse selon l'invention ont un module sécant M1 à 1% d'allongement plus faible que la référence, et une résistance à rupture Fr plus élevée, celle-ci étant atteinte pour un allongement relatif à rupture Ar au moins 50% inférieur à celui de la référence.

L'invention a été plus particulièrement étudiée pour un pneumatique pour véhicule agricole de dimension 710/70R42 VF, c'est-à-dire ayant, selon les définitions de la norme de l'ETRTO, une largeur de section S=710 mm, un rapport de la hauteur de section sur la largeur de section H/S=70% et une jante de montage ayant un diamètre Dj=42 pouces=1066.8 mm. Ce pneumatique est en outre un pneumatique « VF » (Very High Flexion). Des caractéristiques précédentes on peut déduire le rayon extérieur du pneumatique R=Rj+H, avec Rj, rayon de la jante, égal à Dj/2=533.4 mm et H=0.7*S=497 mm. Avec ces hypothèses R est égal à 533.4+497=1030.4mm. En prenant Cs*Pmax égale à 1000 kPa, la résistance de référence seuil Fs est égale à $Fs=(Cs*Pmax*10^{-3})*((R^2-((R+Rj)/2)^2)/2)/Rj=10^3*10^{-3}*((1030.4^2-((1030.4+533.4)/2)^2)/2)533.4=422$ daN/cm. Par conséquent l'armature de carcasse, constituée d'une unique couche de carcasse, doit avoir une épaisseur moyenne E au plus égale à 2 mm et une résistance à rupture Fr au moins égale à Fs=422 daN/cm

Le tableau 1 ci-dessous présente les caractéristiques des renforts textiles respectifs des couches de carcasse comparées, correspondant à celles dont les lois de comportement sont présentées sur la figure 8, à savoir la couche de carcasse de référence avec des renforts textiles comprenant un assemblage de 2 brins en PET, une couche de carcasse selon un premier mode de réalisation I1 avec des renforts textiles hybrides comprenant un assemblage constitué de deux brins multifilamentaires en aramide, et d'un unique brin multifilamentaire en nylon, et une couche de carcasse selon un deuxième mode de réalisation I2 avec des renforts textiles hybrides comprenant un assemblage constitué d'une âme constituée d'un premier brin multifilamentaire en nylon, et d'une couche comprenant trois deuxièmes brins multifilamentaires en aramide.

**[Tableau 1]**

| Couche de carcasse | E | I1 | I2 |
|---|---|---|---|
| Nature des brins | PET/PET | Aramide/Aramide/ Nylon | Nylon/1+Aramide/3 |

(suite)

| Couche de carcasse | E | I1 | I2 |
|---|---|---|---|
| Titres des brins (tex) | 144/144 | 330/330/188 | 47+ 167/167/167 |
| Torsions T des brins (tours/m) | 420/420 | 270/270 | 340+315/315 |
| Facteur de torsion K | 192 | 212 | 196 |
| Densité (nombre de renforts/dm) | 120 | 67 | 81 |
| Diamètre de renfort d (mm) | 0,62 mm | 1,11 mm | 0,92 mm |
| Epaisseur de couche Et (mm) | 1,41 mm | 1,90 mm | 1,80 mm |
| Rapport d/Et | 0,44 | 0,58 | 0,51 |

Définition des caractéristiques du tableau 1 :

- Titre des brins (tex) : masse en g d'un brin multifilamentaire de longueur égale à 10000 m (1 tex = 1 g/10000 m).
- Torsion T des brins (tours/m) : nombre de tours de torsion appliqués. La 1ère valeur est la torsion appliquée à un brin multifilamentaire selon un premier sens de torsion S, et la 2ème valeur est la torsion appliquée à l'assemblage de brins multifilamentaires élémentaires selon un deuxième sens de torsion Z, inverse du précédent.
- Facteur de torsion K : Le facteur de torsion K est défini par la relation $K = T \times [(\text{Titre} / (1000.\rho)]^{1/2}$, dans laquelle la torsion T de l'assemblage de brins multifilamentaires élémentaires, c'est-à-dire du renfort, est exprimée en nombre de tours par mètre, le titre du renfort est exprimé en tex (masse en g d'un élément de renfort ayant une longueur égale à 10000 m), et enfin $\rho$ est la densité ou masse volumique (en g/cm3) du matériau (à titre d'exemples : environ 1,50 g/cm3 pour la cellulose, 1,44 g/cm3 pour l'aramide, 1,38 g/cm3 pour un polyester tel que PET, 1,14 g/cm3 pour le nylon). Dans le cas d'un renfort hybride, $\rho$ est une moyenne des densités pondérées par les titres respectifs des matériaux de l'élément de renfort.
- Densité (nombre de renforts/dm) : Nombres de renforts par dm de couche de carcasse. C'est l'inverse du pas P, séparant les lignes moyennes de deux renforts consécutifs.
- Diamètre d du renfort (mm) : Diamètre du cercle circonscrit à l'assemblage de brins multifilamentaires constituant le renfort.
- Epaisseur de couche Et (mm) : Epaisseur totale de la couche de carcasse, égale à la somme du diamètre du renfort d et des épaisseurs de mélange élastomérique, dit de calandrage, enrobant de part et d'autre les renforts. L'épaisseur arasée E de la couche de carcasse est égale au diamètre d du renfort.

Le tableau 2 ci-dessous présente, pour une couche de carcasse selon la référence E, ainsi que pour les couches de carcasse respectives selon les variantes de réalisation I1 et I2 de l'invention, les caractéristiques mécaniques suivantes :

**[Tableau 2]**

| Couche de carcasse | E | I1 | I2 |
|---|---|---|---|
| Résistance à rupture Fr d'une couche de carcasse (daN/cm) | 213 daN/cm | 775 daN/cm | 641 daN/cm |
| Ratio M1/Fr du module sécant M1 à 1% d'allongement versus la résistance à rupture Fr de couche de carcasse | 7,70 | 3,53 | 0,82 |

Le pneumatique de référence, comprenant une armature de carcasse à trois couches de carcasse, chaque couche de carcasse ayant les caractéristiques de la référence E des tableaux 1 et 2, est comparé à deux pneumatiques comprenant une armature de carcasse à une seule couche de carcasse, présentant les caractéristiques des variantes I1 et I2 des tableaux 1 et 2. Le tableau 3 ci-dessous présente cette comparaison :

**[Tableau 3]**

| Pneumatique | E | I1 | I2 |
|---|---|---|---|
| Nombre de couches de carcasse | 3 | 1 | 1 |
| Epaisseur totale de l'armature de carcasse (mm) | 4,23 mm | 1,90 mm | 1,80 mm |

(suite)

| Pneumatique | E | I1 | I2 |
|---|---|---|---|
| Epaisseur arasée E de l'armature de carcasse monocouche (mm) | Sans objet | 1,11 mm | 0,92 mm |
| Résistance à rupture totale de l'armature de carcasse (daN/cm) | 638 daN/cm | 775 daN/cm | 641 daN/cm |

Le tableau 3 montre que les armatures de carcasse des variantes I1 et I2 satisfont bien les deux caractéristiques essentielles de l'invention : une épaisseur moyenne E inférieure à 2 mm, et même inférieure à 1.2 mm, et une résistance à rupture Fr supérieure à la résistance de référence seuil Fs=422 daN/cm.

Le tableau 4 ci-dessous présente les caractéristiques de sculpture et d'armature de sommet combinées avec les caractéristiques d'armature de carcasse, pour la référence E et la variante de réalisation I1.

**[Tableau 4]**

| Caractéristiques | Référence E (710/70R42 IF 179D Michelin AXIOBIB) | Invention I1 (710/70R42 VF 179D) |
|---|---|---|
| Nombre de couches de carcasse | 3 | 1 |
| Nature des renforts de couche carcasse | PET/PET | Aramide/Aramide/Nylon |
| Nombre de couches de sommet | 6 | 2 |
| Nature des renforts des couche de sommet | Assemblage de 3 fils de rayonne, ayant un diamètre égal à 0.94 mm | Renfort métallique élastique 24.26, constitué de 24 fils acier, ayant un diamètre unitaire égal à 26/100 mm, répartis en 4 torons de 6 fils |
| Taux d'entaillement volumique global TEV de la bande de roulement | > 65% | < 50% |
| Hauteur radiale moyenne H de la bande de roulement | 65 mm | 45 mm |
| Type de sculpture de la bande roulement | Sculpture à barrettes | Sculpture à blocs comprenant 4 creux longitudinaux, axialement positionnés de part et d'autre du plan équatorial |
|  |  | médian du pneumatique, les deux creux longitudinaux intermédiaires étant distants entre eux d'une distance axiale égale à 370 mm et les deux creux longitudinaux axialement extérieurs étant distants entre eux d'une distance axiale égale à 568 mm |

La diminution de rigidité structurelle du pneumatique, visée par les inventeurs et obtenue grâce à une armature de carcasse monocouche telle que proposée par l'invention, peut encore être accentuée par la combinaison de ladite armature de carcasse monocouche avec une armature de sommet et une bande de roulement de plus faibles épaisseurs que celles du pneumatique de référence. Ainsi l'armature de sommet comprend avantageusement deux couches de sommet à renforts métalliques élastiques, au lieu de six couches de renforts textiles en rayonne. Par ailleurs, la bande de roulement traditionnelle avec une sculpture à barrettes comprend encore avantageusement une sculpture à blocs de plus faible hauteur radiale (45 mm au lieu de 65 mm), donc plus mince, mais avec un taux d'entaillement volumique plus faible (inférieur à 50% au lieu de supérieur à 60 %), donc plus fermée. Cette sculpture à blocs comprend enfin deux creux longitudinaux axialement extérieurs suffisamment distants entre eux (568 mm) pour assurer une fonction de charnières garantissant une mise à plat facilitée de la bande de roulement.

**Revendications**

1. Pneumatique (1) pour véhicule agricole, destiné à être monté sur une jante (5) ayant un diamètre nominal Dj, défini comme le « Nominal Rim Diameter » (Diamètre nominal de la jante), dans la section consacrée aux « Agricultural equipment tyres » du « Standards Manual-2018 » de la norme de l'ETRTO et à être gonflé à une pression minimale recommandée au plus égale à 240 kPa, ayant un diamètre extérieur D, défini comme le « Design Overall Diameter » (Diamètre de conception hors tout) dans la section consacrée aux « Agricultural equipment tyres » du « Standards Manual-2018 » de la norme de l'ETRTO, et comprenant, radialement de l'extérieur vers l'intérieur, une bande de roulement (2), une armature de sommet (3) et une armature de carcasse (4) :

   - la bande de roulement (2) comprenant des éléments de sculpture (22) séparés les uns des autres par des creux (23) et ayant une hauteur radiale H au moins égale à 20 mm et au plus égale à 60 mm, mesurée entre une surface de roulement (25) et une surface portante (24) parallèle à la surface de roulement (25) et tangente aux fonds des creux les plus profonds,
   - la bande de roulement (2), ayant une largeur axiale L, comprenant au moins deux creux axialement extérieurs (231), ayant chacun une ligne moyenne formant avec une direction circonférentielle (XX') du pneumatique un angle au plus égal à 45°, positionnés de part et d'autre d'un plan équatorial (XZ) passant par le milieu de la bande de roulement (2) et distants entre eux d'une distance axiale moyenne L1 au moins égale à 0.5*L,
   - la bande de roulement (2) ayant un taux d'entaillement volumique global TEV, défini comme le ratio entre le volume VC de creux (23) et le volume total V de la bande de roulement (2) supposée sans creux, compris entre la surface portante (24) et la surface de roulement (25), au moins égal à 30% et au plus égal à 60%,
   - l'armature de sommet (3) comprenant au moins deux couches de sommet (31, 32), comprenant chacune des renforts enrobés dans un matériau à base d'élastomère, parallèles entre eux, croisés d'une couche à la suivante, et formant, avec la direction circonférentielle (XX') du pneumatique, un angle au moins égal à 10°,
   - l'armature de carcasse (4) comprenant au moins une couche de carcasse (41), comprenant des renforts textiles enrobés dans un matériau à base d'élastomère, parallèles entre eux, et formant, avec la direction circonférentielle (XX') du pneumatique, un angle au moins égal à 75° et au plus égal à 105°,

   **caractérisé en ce que** l'armature de carcasse (4) est constituée d'une unique couche de carcasse (41) ayant une épaisseur moyenne E au plus égale à 2 mm et une résistance à rupture Fr, exprimée en daN/cm, vérifiant la relation :

$$Fr>=Fs=(Cs*Pmax*10^{-3})*((R^2-((R+Rj)/2)^2)/2)/Rj,$$

   avec

   - Fr = FCr/P, FCr étant la force à rupture, exprimée en daN, d'un renfort textile, et définie comme la force limite de la courbe « Force-Allongement » du renfort textile, obtenue dans les conditions de la norme ASTM D 885/D 885M - 10a de 2014, et P étant le pas séparant les lignes moyennes de deux renforts consécutifs,
   - Fs : résistance de référence seuil (en daN/cm),
   - Cs : coefficient de sécurité au moins égal à 1,
   - Pmax : pression maximale de gonflage recommandée (en kPa),
   - R=D/2 : rayon extérieur du pneumatique (en mm),
   - Rj=Dj/2 : rayon nominal de la jante (en mm).

2. Pneumatique (1) selon la revendication 1, **dans lequel** Cs*Pmax est au moins égal à 1000 kPa.

3. Pneumatique (1) selon l'une des revendications 1 ou 2, **dans lequel** Cs*Pmax est au moins égal à 1500 kPa.

4. Pneumatique (1) selon l'une quelconque des revendications 1 à 3, **dans lequel** l'épaisseur moyenne E de la couche de carcasse (41) est au plus égale à 1.2 mm.

5. Pneumatique (1) selon l'une quelconque des revendications 1 à 4, **dans lequel** les renforts textiles de l'unique couche de carcasse (41) comprennent un assemblage constitué d'au moins un brin multifilamentaire en polyamide aromatique ou copolyamide aromatique et/ou en polyamide aliphatique et/ou en polyester et/ou en cellulose.

6. Pneumatique (1) selon l'une quelconque des revendications 1 à 5, **dans lequel** les renforts textiles de l'unique couche de carcasse (41) sont des renforts textiles hybrides comprenant un assemblage constitué d'au moins un brin multifilamentaire en polyamide aromatique ou copolyamide aromatique et d'au moins un brin multifilamentaire en polyamide aliphatique.

7. Pneumatique (1) selon l'une des revendications 5 ou 6, **dans lequel** la couche de carcasse (41), dans son état vulcanisé et extraite du pneumatique, a une loi de comportement en extension ayant un module sécant M1 à la force équivalente développée par la couche de carcasse à 1% d'allongement, tel que le rapport M1/Fr du module sécant M1 à la force équivalente développée par la couche de carcasse à 1% d'allongement sur la résistance à rupture Fr de la couche de carcasse est strictement inférieur à 7, de préférence inférieur ou égal à 5, et plus préférentiellement, inférieur ou égal à 4.

8. Pneumatique (1) selon la revendication 7, **dans lequel** le rapport M1/Fr du module sécant M1 à la force équivalente développée par la couche de carcasse à 1% d'allongement sur la résistance à rupture Fr de la couche de carcasse est supérieur ou égal à 0.5.

9. Pneumatique (1) selon l'une quelconque des revendications 5 à 8, **dans lequel** les renforts textiles hybrides de la couche de carcasse (41) comprennent un assemblage constitué de deux brins multifilamentaires en polyamide aromatique ou copolyamide aromatique, et d'un unique brin multifilamentaire en polyamide aliphatique, les brins étant enroulés ensemble en hélice.

10. Pneumatique (1) selon l'une quelconque des revendications 5 à 8, **dans lequel** les renforts textiles hybrides de la couche de carcasse (41) comprennent un assemblage constitué d'un unique brin multifilamentaire en polyamide aromatique ou copolyamide aromatique, et d'un unique brin multifilamentaire en polyamide aliphatique, les brins étant enroulés ensemble en hélice.

11. Pneumatique (1) selon l'une quelconque des revendications 5 à 8, **dans lequel** les renforts textiles hybrides de la couche de carcasse (41) comprennent un assemblage constitué d'une âme constituée d'un premier brin multifilamentaire en polyamide aliphatique, et d'une couche comprenant au moins deux deuxièmes brins multifilamentaires en polyamide aromatique ou copolyamide aromatique, les deuxièmes brins de la couche étant enroulés ensemble en hélice autour de l'âme.

12. Pneumatique (1) selon l'une quelconque des revendications 1 à 11, chaque couche de sommet (31, 32) ayant une loi de comportement en extension **caractérisée par** un module sécant à la rupture M'=F'r/A'r (en daN/cm/%), F'r étant la résistance à rupture de la couche de sommet (en daN/cm) et A'r son allongement à rupture (en %), **dans lequel** l'armature de sommet (3) comprenant au moins deux couches de sommet (31, 32), ayant chacune un module sécant à la rupture M', a un module à la rupture résultant M's, défini comme la somme des modules sécants à la rupture M' de l'ensemble des couches de sommet, au moins égal à 150 daN/cm/%, de préférence au moins égal à 300 daN/cm/%.

13. Pneumatique (1) selon la revendication 12, **dans lequel** les renforts des au moins deux couches de sommet (31, 32) de l'armature de sommet (3) sont métalliques.

14. Pneumatique (1) selon la revendication 13, **dans lequel** les renforts métalliques des au moins deux couches de sommet (31, 32) de l'armature de sommet (3) ont une loi de comportement bi-élastique comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée, sur la base de la norme ISO 6892 de 1984, pour un renfort métallique enrobé dans un mélange élastomérique ayant un module d'élasticité en extension à 10% d'allongement MA10, déterminé à partir d'essais de traction réalisés conformément à la norme française NF T 46-002 de septembre 1988, au moins égal à 5 MPa et au plus égal à 15 MPa, **et dans lequel** tout renfort métallique de couche de sommet (31, 32) a une loi de comportement en compression, **caractérisée par** une déformation critique de flambage en compression E0 au moins égale à 3%, ladite loi de comportement en compression étant déterminée sur une éprouvette constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa.

15. Pneumatique (1) selon la revendication 14, **dans lequel** tout renfort métallique de couche de sommet (31, 32) est un câble multitoron de structure 1xN comprenant une unique couche de N torons, chaque toron comprenant une couche interne de M fils internes enroulés en hélice et une couche externe de P fils externes enroulés en hélice autour de la couche interne.

**Patentansprüche**

1.  Reifen (1) für ein landwirtschaftliches Fahrzeug, welcher dazu bestimmt ist, auf einer Felge (5) mit einem Nenndurchmesser Dj, der als der "Nominal Rim Diameter" (Nenndurchmesser der Felge) im den "Agricultural equipment tyres" gewidmeten Abschnitt des "Standards Manual-2018" der Norm der ETRTO definiert ist, montiert zu werden und mit einem empfohlenen Mindestdruck von höchstens 240 kPa aufgepumpt zu werden, und welcher einen Außendurchmesser D aufweist, der als der "Design Overall Diameter" (Außendurchmesser als Konstruktionsmaß) im den "Agricultural equipment tyres" gewidmeten Abschnitt des "Standards Manual-2018" der Norm der ETRTO definiert ist, und radial von außen nach innen einen Laufstreifen (2), eine Scheitelbewehrung (3) und eine Karkassenbewehrung (4) umfasst:

    - wobei der Laufstreifen (2) Profilelemente (22) umfasst, die durch Vertiefungen (23) voneinander getrennt sind und eine radiale Höhe H von mindestens 20 mm und höchstens 60 mm aufweisen, gemessen zwischen einer Lauffläche (25) und einer zur Lauffläche (25) parallelen und zu den Böden der tiefsten Vertiefungen tangentialen tragenden Fläche (24),
    - wobei der Laufstreifen (2), wenn er eine axiale Breite L aufweist, mindestens zwei axial äußere Vertiefungen (231) umfasst, die jeweils eine Mittellinie aufweisen, die mit einer Umfangsrichtung (XX') des Reifens einen Winkel von höchstens 45° bildet, beiderseits einer durch die Mitte des Laufstreifens (2) verlaufenden Äquatorialebene (XZ) positioniert sind und voneinander um einen mittleren axialen Abstand L1 beabstandet sind, der mindestens 0,5*L beträgt,
    - wobei der Laufstreifen (2) einen volumenbezogenen Negativprofilanteil TEV, der als das Verhältnis zwischen dem Volumen VC der Vertiefungen (23) und dem Gesamtvolumen V des als keine Vertiefungen aufweisend angenommenen Laufstreifens (2), das sich zwischen der tragenden Fläche (24) und der Lauffläche (25) befindet, definiert ist, von mindestens 30 % und höchstens 60 % aufweist,
    - wobei die Scheitelbewehrung (3) mindestens zwei Scheitellagen (31, 32) umfasst, die jeweils in ein Material auf Elastomerbasis eingebettete Festigkeitsträger umfassen, die zueinander parallel sind, sich von einer Schicht zur folgenden überkreuzen und mit der Umfangsrichtung (XX') des Reifens einen Winkel von mindestens 10° bilden,
    - wobei die Karkassenbewehrung (4) mindestens eine Karkassenlage (41) umfasst, die in ein Material auf Elastomerbasis eingebettete textile Festigkeitsträger umfasst, die zueinander parallel sind und mit der Umfangsrichtung (XX') des Reifens einen Winkel von mindestens 75° und höchstens 110° bilden,

    **dadurch gekennzeichnet, dass** die Karkassenbewehrung (4) aus einer einzigen Karkassenlage (41) besteht, die eine mittlere Dicke E von höchstens 2 mm aufweist, sowie eine Bruchfestigkeit Fr, ausgedrückt in daN/cm, welche die Beziehung erfüllt:

    $$\mathrm{Fr} \geq \mathrm{Fs} = (\mathrm{Cs*Pmax*10^{-3})*((R^2-((R+Rj)/2)^2)/2)/Rj,}$$

    mit

    - Fr = FCr/P, wobei FCr die in daN ausgedrückte Reißfestigkeit eines textilen Festigkeitsträgers ist und als die Grenzkraft der Kraft-Dehnungs-Kurve des textilen Festigkeitsträgers definiert ist, die unter den Bedingungen der Norm ASTM D 885/D 885M - 10a von 2014 erhalten wird, und P der Abstand ist, der die Mittellinien von zwei aufeinander folgenden Festigkeitsträgern trennt,
    - Fs: Schwellen-Referenzfestigkeit (in daN/cm),
    - Cs: Sicherheitsfaktor, mindestens gleich 1,
    - Pmax: empfohlener maximaler Reifenfülldruck (in kPa),
    - R = D/2: Außenradius des Reifens (in mm),
    - Rj = Dj/2: Nennradius der Felge (in mm).

2.  Reifen (1) nach Anspruch 1, wobei Cs*Pmax mindestens 1000 kPa beträgt.

3.  Reifen (1) nach einem der Ansprüche 1 oder 2, wobei Cs*Pmax mindestens 1500 kPa beträgt.

4.  Reifen (1) nach einem der Ansprüche 1 bis 3, wobei die mittlere Dicke E der Karkassenlage (41) höchstens 1,2 mm beträgt.

**5.** Reifen (1) nach einem der Ansprüche 1 bis 4, wobei die textilen Festigkeitsträger der einzigen Karkassenlage (41) einen Aufbau umfassen, der aus mindestens einer Multifilamentfaser aus aromatischem Polyamid oder aromatischem Copolyamid und/oder aus aliphatischem Polyamid und/oder aus Polyester und/oder aus Cellulose besteht.

**6.** Reifen (1) nach einem der Ansprüche 1 bis 5, wobei die textilen Festigkeitsträger der einzigen Karkassenlage (41) hybride textile Festigkeitsträger sind, die einen Aufbau umfassen, der aus mindestens einer Multifilamentfaser aus aromatischem Polyamid oder aromatischem Copolyamid und aus mindestens einer Multifilamentfaser aus aliphatischem Polyamid besteht.

**7.** Reifen (1) nach einem der Ansprüche 5 oder 6, wobei die Karkassenlage (41) in ihrem vulkanisierten und aus dem Reifen entnommenen Zustand ein Gesetz des Dehnungsverhaltens mit einem solchen Sekantenmodul M1 bei der von der Karkassenlage bei 1 % Dehnung entwickelten äquivalenten Kraft aufweist, dass das Verhältnis M1/Fr des Sekantenmoduls M1 bei der von der Karkassenlage bei 1 % Dehnung entwickelten äquivalenten Kraft zur Bruchfestigkeit Fr der Karkassenlage streng kleiner als 7, vorzugsweise kleiner oder gleich 5 und stärker bevorzugt kleiner oder gleich 4 ist.

**8.** Reifen (1) nach Anspruch 7, wobei das Verhältnis M1/Fr des Sekantenmoduls M1 bei der von der Karkassenlage bei 1 % Dehnung entwickelten äquivalenten Kraft zur Bruchfestigkeit Fr der Karkassenlage größer oder gleich 0,5 ist.

**9.** Reifen (1) nach einem der Ansprüche 5 bis 8, wobei die hybriden textilen Festigkeitsträger der Karkassenlage (41) einen Aufbau umfassen, der aus zwei Multifilamentfasern aus aromatischem Polyamid oder aromatischem Copolyamid und aus einer einzigen Multifilamentfaser aus aliphatischem Polyamid besteht, wobei die Fasern zusammen schraubenförmig gewickelt sind.

**10.** Reifen (1) nach einem der Ansprüche 5 bis 8, wobei die hybriden textilen Festigkeitsträger der Karkassenlage (41) einen Aufbau umfassen, der aus einer einzigen Multifilamentfaser aus aromatischem Polyamid oder aromatischem Copolyamid und aus einer einzigen Multifilamentfaser aus aliphatischem Polyamid besteht, wobei die Fasern zusammen schraubenförmig gewickelt sind.

**11.** Reifen (1) nach einem der Ansprüche 5 bis 8, wobei die hybriden textilen Festigkeitsträger der Karkassenlage (41) einen Aufbau umfassen, der aus einem Kern besteht, der aus einer ersten Multifilamentfaser aus aliphatischem Polyamid besteht, und aus einer Schicht, die mindestens zwei zweite Multifilamentfasern aus aromatischem Polyamid oder aromatischem Copolyamid umfasst, wobei die zweiten Fasern der Schicht zusammen schraubenförmig um den Kern gewickelt sind.

**12.** Reifen (1) nach einem der Ansprüche 1 bis 11, wobei jede Scheitellage (31, 32) ein Gesetz des Dehnungsverhaltens aufweist, das durch einen Sekantenmodul bei Bruch M' = F'r/A'r (in daN/cm/%) gekennzeichnet ist, wobei F'r die Bruchfestigkeit der Scheitellage (in daN/cm) ist und A'r ihre Bruchdehnung (in %) ist, wobei die Scheitelbewehrung (3), die mindestens zwei Scheitellagen (31, 32) umfasst, die jeweils ein Sekantenmodul bei Bruch M' aufweisen, einen resultierenden Bruchmodul M's, der als die Summe der Sekantenmodule bei Bruch M' der Gesamtheit der Scheitellagen definiert ist, aufweist, der mindestens 150 daN/cm/%, vorzugsweise mindestens 300 daN/cm/% beträgt. S

**13.** Reifen (1) nach Anspruch 12, wobei die Festigkeitsträger der mindestens zwei Scheitellagen (31, 32) der Scheitelbewehrung (3) metallisch sind.

**14.** Reifen (1) nach Anspruch 13, wobei die metallischen Festigkeitsträger der mindestens zwei Scheitellagen (31, 32) der Scheitelbewehrung (3) ein Gesetz des bielastischen Verhaltens aufweisen, das einen ersten Abschnitt mit einem ersten Dehnungsmodul MG1 von höchstens 30 GPa und einen zweiten Abschnitt mit einem zweiten Dehnungsmodul MG2, der mindestens gleich dem 2-Fachen des ersten Dehnungsmoduls MG1 ist, umfasst, wobei dieses Gesetz des Dehnungsverhaltens auf der Basis der Norm ISO 6892 von 1984 für einen metallischen Festigkeitsträger bestimmt wird, der in eine Elastomermischung eingebettet ist, die einen Dehnungselastizitätsmodul bei 10 % Dehnung MA10, der aus gemäß der französischen Norm NF T 46-002 vom September 1988 durchgeführten Zugversuchen bestimmt wird, von mindestens 5 MPa und höchstens 15 MPa aufweist, und wobei jeder metallische Festigkeitsträger einer Scheitellage (31, 32) ein Gesetz des Druckverhaltens aufweist, das durch eine kritische Verformung des Knickens unter Druck E0 gekennzeichnet ist, die mindestens 3 % beträgt, wobei dieses Gesetz des Druckverhaltens an einem Prüfkörper bestimmt wird, der aus einem Festigkeitsträger besteht, der in seiner Mitte angeordnet ist und in ein quaderförmiges Volumen aus Elastomermischung eingebettet ist, die einen Dehnungselastizitätsmodul bei 10 % Dehnung MA10 von mindestens 5 MPa und höchstens 15 MPa aufweist.

15. Reifen (1) nach Anspruch 14, wobei jeder metallische Festigkeitsträger einer Scheitellage (31, 32) ein mehrlitziges Seil mit der Struktur 1xN ist, das eine einzige Schicht von N Litzen aufweist, wobei jede Litze eine innere Schicht von M inneren Drähten, die schraubenförmig gewickelt sind, und eine äußere Schicht von P äußeren Drähten, die schraubenförmig um die innere Schicht gewickelt sind, umfasst.

**Claims**

1. Tyre (1) for an agricultural vehicle, intended to be mounted on a rim (5) having a nominal diameter Dj, defined as the "Nominal Rim Diameter" in the section devoted to "Agricultural equipment tyres" in the "Standards Manual-2018" of the ETRTO standard, and to be inflated to a recommended minimum pressure at most equal to 240 kPa, having an outside diameter D, defined as the "Design Overall Diameter" in the section devoted to "Agricultural equipment tyres" in the "Standards Manual-2018" of the ETRTO standard, and comprising, radially from the outside to the inside, a tread (2), a crown reinforcement (3) and a carcass reinforcement (4):

   - the tread (2) comprising tread pattern elements (22) that are separated from one another by voids (23) and having a radial height H at least equal to 20 mm and at most equal to 60 mm, measured between a tread surface (25) and a bearing surface (24) parallel to the tread surface (25) and tangential to the bottoms of the deepest voids,
   - the tread (2), which has an axial width L, comprising at least two axially outer voids (231), each having a mean line that forms an angle at most equal to 45° with a circumferential direction (XX') of the tyre, which are positioned on either side of an equatorial plane (XZ) passing through the middle of the tread (2) and are spaced apart from one another by a mean axial distance L1 at least equal to 0.5*L,
   - the tread (2) having an overall volumetric void ratio TEV, defined as the ratio between the volume VC of voids (23) and the total volume V of the tread (2) assumed to be free of voids, comprised between the bearing surface (24) and the tread surface (25), at least equal to 30% and at most equal to 60%,
   - the crown reinforcement (3) comprising at least two crown layers (31, 32), each comprising metal reinforcers that are coated in an elastomer-based material, are mutually parallel, are crossed from one layer to the next and form an angle at least equal to 10° with the circumferential direction (XX') of the tyre,
   - the carcass reinforcement (4) comprising at least one carcass layer (41) comprising textile reinforcers that are coated in an elastomer-based material, are mutually parallel and form an angle at least equal to 75° and at most equal to 105° with the circumferential direction (XX') of the tyre,

   **characterized in that** the carcass reinforcement (4) is made up of a single carcass layer (41) having a mean thickness E at most equal to 2 mm and a breaking strength Fr, expressed in daN/cm, that satisfies the relationship:

   $$Fr >= Fs = (Cs*Pmax*10^{-3})*((R^2-((R+Rj)/2)^2)/2)/Rj,$$

   with

   - FCr/P, FCr being the force at break, expressed in daN, of a textile reinforcer, and defined as the limit force of the "Force-Elongation" curve of the textile reinforcer, obtained under the conditions of the standard ASTM D 885/D 885M - 10a of 2014, and P being the spacing between the distance between the respective neutral axes of two consecutive reinforcers,
   - Fs: reference threshold strength (in daN/cm),
   - Cs: safety factor at least equal to 1,
   - Pmax: recommended maximum inflation pressure (in kPa),
   - R=D/2: outside radius of the tyre (in mm),
   - Rj=Dj/2: nominal radius of the rim (in mm).

2. Tyre (1) according to Claim 1, **wherein** Cs*Pmax is at least equal to 1000 kPa.

3. Tyre (1) according to either of Claims 1 and 2, **wherein** Cs*Pmax is at least equal to 1500 kPa.

4. Tyre (1) according to any one of Claims 1 to 3, **wherein** the mean thickness E of the carcass layer (41) is at most equal to 1.2 mm.

**5.** Tyre (1) according to any one of Claims 1 to 4, **wherein** the textile reinforcers of the single carcass layer (41) comprise an assembly made up of at least one multifilament strand made of aromatic polyamide or aromatic copolyamide and/or of aliphatic polyamide and/or of polyester and/or of cellulose.

**6.** Tyre (1) according to any one of Claims 1 to 5, **wherein** the textile reinforcers of the single carcass layer (41) are hybrid textile reinforcers comprising an assembly made up of at least one multifilament strand made of aromatic polyamide or aromatic copolyamide, and of at least one multifilament strand made of aliphatic polyamide.

**7.** Tyre (1) according to either of Claims 5 and 6, **wherein** the carcass layer (41), in its vulcanized state and when removed from the tyre, has a law governing its behaviour under tension having a secant modulus M1 at the equivalent force developed by the carcass layer at 1% elongation such that the ratio M1/Fr of the secant modulus M1 at the equivalent force developed by the carcass layer at 1% elongation to the breaking strength Fr of the carcass layer is strictly less than 7, preferably less than or equal to 5, and more preferably less than or equal to 4.

**8.** Tyre (1) according to Claim 7, **wherein** the ratio M1/Fr of the secant modulus M1 at the equivalent force developed by the carcass layer at 1% elongation to the breaking strength Fr of the carcass layers is greater than or equal to 0.5.

**9.** Tyre (1) according to any one of Claims 5 to 8, **wherein** the hybrid textile reinforcers of the carcass layer (41) comprise an assembly made up of two multifilament strands made of aromatic polyamide or aromatic copolyamide, and of a single multifilament strand made of aliphatic polyamide, the strands being wound together in a helix.

**10.** Tyre (1) according to any one of Claims 5 to 8, **wherein** the hybrid textile reinforcers of the carcass layer (41) comprise an assembly made up of a single multifilament strand made of aromatic polyamide or aromatic copolyamide, and of a single multifilament strand made of aliphatic polyamide, the strands being wound together in a helix.

**11.** Tyre (1) according to any one of Claims 5 to 8, **wherein** the hybrid textile reinforcers of the carcass layer (41) comprise an assembly made up of a core made up of a first multifilament strand made of aliphatic polyamide, and of a layer comprising at least two second multifilament strands made of aromatic polyamide or aromatic copolyamide, the second strands of the layer being wound together in a helix around the core.

**12.** Tyre (1) according to any one of Claims 1 to 11, each crown layer (31, 32) having a law governing its behaviour under tension **characterized by** a secant modulus at break M'=F'r/A'r (in daN/cm/%), F'r being the breaking strength of the crown layer (in daN/cm) and A'r its elongation at break (in %), **wherein** the crown reinforcement (3), comprising at least two crown layers (31, 32) that each have a secant modulus at break M', has a resultant modulus at break M's, defined as the sum of the secant moduli at break M' of all of the crown layers, at least equal to 150 daN/cm/%, preferably at least equal to 300 daN/cm/%.

**13.** Tyre (1) according to Claim 12, **wherein** the reinforcers of the at least two crown layers (31, 32) of the crown reinforcement (3) are metallic.

**14.** Tyre (1) according to Claim 13, **wherein** the metal reinforcers of the at least two crown layers (31, 32) of the crown reinforcement (3) have a law governing their two-way elastic behaviour comprising a first portion having a first tensile modulus MG1 at most equal to 30 GPa, and a second portion having a second tensile modulus MG2 at least equal to 2 times the first tensile modulus MG1, said law governing the behaviour under tension being determined, on the basis of the standard ISO 6892 of 1984, for a metal reinforcer coated in an elastomeric compound having a tensile elastic modulus at 10% elongation MA10, determined from traction tests carried out in accordance with the French standard NF T 46-002 of September 1988, at least equal to 5 MPa and at most equal to 15 MPa, **and wherein** any metal reinforcer of a crown layer (31, 32) has a law governing its behaviour under compression that is **characterized by** a critical buckling strain E0 at least equal to 3%, said law governing behaviour under compression being determined on a test specimen made up of a reinforcer placed at its centre and coated with a parallelepipedal volume of an elastomeric compound having a tensile elastic modulus at 10% elongation MA10 at least equal to 5 MPa and at most equal to 15 MPa.

**15.** Tyre (1) according to Claim 14, **wherein** any metal reinforcer of a crown layer (31, 32) is a multi-strand rope of structure 1xN comprising a single layer of N strands, each strand comprising an internal layer of M internal threads wound in a helix and an external layer of P external threads wound in a helix around the internal layer.

FIG. 1

FIG. 2

41   411   412

E

E$_t$

P

FIG. 3

F(daN/cm)

800
Fr
700

600

500

400

300

200

100

M1

0   1%                                                      A(%)

FIG. 4

N

A

FIG. 5

A

N

FIG. 6

A

A

A

A

FIG. 7

FIG. 8

**EP 4 100 265 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006124215 A1